# EUROPÄISCHE PATENTANMELDUNG

(11) **EP 2 306 094 A1**
(43) Veröffentlichungstag der Anmeldung: **06.04.2011**
(21) Anmeldenummer: 10183533.8
(22) Anmeldetag: 30.09.2010
(51) Int. Cl.: F24C 15/00, F21S 10/04

(54) **Beleuchtungsvorrichtung mit Feuersimulator für einen Backofen**

(30) Priorität: 02.10.2009 DE 202009013277 U
(71) Anmelder: Wachtel GmbH & Co. Bäckereimaschinen-Backöfen, D-40721 Hilden (DE)
(72) Erfinder: Keßelhut, Uwe, 40668 Meerbusch (DE)
(74) Vertreter: Prüfer & Partner GbR European Patent Attorneys

(57) **Zusammenfassung**

Die vorliegende Erfindung betrifft eine Backofenbeleuchtungsvorrichtung. Die Beleuchtungsvorrichtung umfasst ein Beleuchtungsmittel (2), eine erste transparente Platte (3), mit inhomogenen Lichtbrechungseigenschaften, wobei die Platte (3) von dem Licht des Beleuchtungsmittels (2) durchstrahlt wird, sowie eine zweite transparente Platte (4), die von dem Licht des Beleuchtungsmittels (2) beleuchtet wird. Mit solch einer Beleuchtungsvorrichtung kann beispielsweise ein brennendes Feuer in einem Backofen simuliert werden.

## Beschreibung

Die Erfindung betrifft eine Beleuchtungsvorrichtung für einen Backofen, die ein Feuer simuliert.

Feuer fasziniert Menschen schon seit jeher. Viele Menschen verbinden mit offenem Feuer daher auch immer etwas Nostalgisches, oder Ursprüngliches. Insbesondere im Gastronomiebereich wirkt ein an offenem Feuer zubereitetes Erzeugnis häufig authentischer. Da Feuer jedoch auch nicht unerhebliche Gefahren in sich birgt, wurden Alternativen entwickelt, die den Eindruck eines Feuers entstehen lassen, jedoch gefahrlos sind.

Insbesondere sind solche künstlichen Feuer aus Kaminen bekannt, die den Eindruck eines Kaminfeuers erwecken sollen. Diese bestehen meist aus einer schräg stehenden Scheibe, deren eine Oberfläche verspiegelt ist und deren andere Oberfläche mit einem farbigen Muster, beispielsweise kleinen gelben Punkten, bedruckt ist. Unterhalb der Schnittfläche dieser Scheibe dreht sich eine Achse mit vielen verchromten Plastikflügeln. Das Licht von zwei Kerzenbirnen wird somit durch unregelmäßige Reflektionen durch die Materialdicke nach oben geleitet und es entsteht der Eindruck von einzelnen züngelnden Flammen.

Durch die üblichen Ausführungen entsteht jedoch nur der Eindruck eines gemütlichen Feuers in einem Kamin. Für die Simulation eines Feuers in einem Backofen, wie er beispielsweise in Bäckereien verwendet wird, sind die üblichen Feuersimulatoren jedoch wenig geeignet. Dies liegt daran, dass Kaminfeuersimulatoren, wie oben beschrieben, nicht temperaturbeständig sind, da in diesen herkömmlichen, simulierten Feuern keine Wärmeentwicklung vorgesehen ist.

Es ist daher Aufgabe der Erfindung eine Beleuchtungsvorrichtung für einen Backofen zur Verfügung zu stellen, die zum einen temperaturbeständig ist und zum anderen ein dem Einsatz des Backofens entsprechendes Feuer simulieren kann.

Diese Aufgabe wird erfindungsgemäß durch die Beleuchtungsvorrichtung gemäß Anspruch 1 gelöst. Vorteilhafte Weiterbildungen sind Gegenstand der Unteransprüche.

Die mit der Erfindung erzielten Vorteile bestehen insbesondere darin, dass durch eine erste transparente Platte mit inhomogenen Lichtbrechungseigenschaften Licht auf eine zweite transparente Platte gestrahlt wird. Vorzugsweise durchläuft das Licht dabei vor der zweiten transparenten Platte eine gefärbte, dritte transparente Platte. Die erste transparente Platte ist vorzugsweise drehbar angeordnet und wird von einer Mehrzahl von Lampen mit verschiedenem Einfallswinkel bestrahlt, so dass auf der zweiten transparenten Platte der Eindruck eines lodernden Feuers im Hintergrund entsteht.

Eine weitere vorteilhafte Ausgestaltung der Erfindung besteht darin, dass das Beleuchtungsmittel, das mindestens eine Lampe aufweist, drehbar angeordnet ist, was ebenfalls den Effekt eines sich bewegenden Feuers hervorruft.

Zudem ist es eine weitere vorteilhafte Ausgestaltung der Erfindung, dass die Lampen des Beleuchtungsmittels farbiges Licht ausstrahlen und somit eine dritte transparente Platte nicht notwendig ist, um ein bewegtes Feuer zu simulieren.

Einzelheiten, Vorteile und Weiterentwicklungen der Erfindung werden anhand einer Ausführungsform unter Bezugnahme auf die Zeichnung näher erläutert. Dabei zeigt:

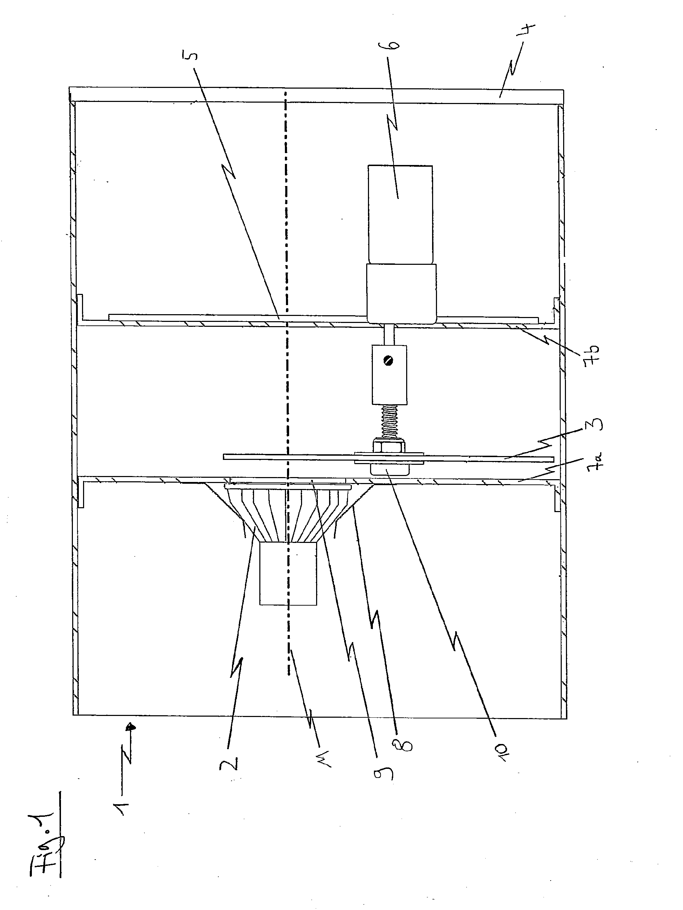

Fig. 1: Eine Beleuchtungsvorrichtung gemäß der bevorzugten Ausführungsform.

Fig. 1 zeigt eine Beleuchtungsvorrichtung 1 für einen Backofen (nicht gezeigt). Die Beleuchtungsvorrichtung 1 ist in der vorliegenden Ausführungsform kastenförmig ausgebildet. Zur vereinfachten Beschreibung werden die folgenden Richtungsdefinitionen verwendet. Eine hintere Richtung ist eine Richtung, in der der Backofen nicht liegt. Eine vordere Richtung ist eine Richtung, in der der Backofen angeordnet ist. In einem hinteren Bereich der Beleuchtungsvorrichtung 1 ist ein Beleuchtungsmittel 2 enthalten. Ein Strahlenverlauf der Beleuchtungsvorrichtung erfolgt aus einer hinteren in eine vordere Richtung. Im Folgenden wird zur vereinfachten Beschreibung des Strahlenverlaufs die Strahlrichtung des Beleuchtungsmittels 2 in Richtung der Vorderseite herangezogen. Es versteht sich, dass das Beleuchtungsmittel 2 einen divergenten Strahlenverlauf aufweisen kann, aber, abhängig von der Wahl des Beleuchtungsmittels, auch andere, nicht divergente Verläufe haben kann.

Das Beleuchtungsmittel 2 ist dabei nicht auf einer Mittelachse M der Beleuchtungsvorrichtung 1 angeordnet, sondern in einer seitlichen Richtung von der Mittelachse verschoben (vgl. Fig. 1).

Das Beleuchtungsmittel 2 wird vorzugsweise aus einer Mehrzahl von Lampen gebildet. Die Lampen sind dabei als Halogenreflektorstrahler ausgebildet. Es sind jedoch auch andere Ausführungsformen mit anderen Lichtquellen, beispielsweise farbige Lampen, lichtemittierende Dioden (LEDs), Laserdioden und Ähnliches denkbar. Die Strahlrichtungen der verschiedenen Lichtquellen, bzw. deren optische Achsen, können gegeneinander geneigt sein.

Weiterhin ist es in einer weiteren Ausführungsform möglich, die Intensität der einzelnen Lichtquellen gemeinsam oder individuell zu variieren.

Dem Strahlenverlauf folgend ist nach dem Beleuchtungsmittel 2 eine Querverstrebung 7a vorgesehen. Die Querverstrebung 7a verläuft senkrecht zu der Strahlrichtung von einer linken Seitenwand zu einer rechten Seitenwand der Beleuchtungsvorrichtung 1. Die Querverstrebung 7a ist an den Seitenwänden der Beleuchtungsvorrichtung 1 fixiert. Weiterhin ist in der Querverstrebung eine Beleuchtungsöffnung 9 vorgesehen. Die Beleuchtungsöffnung 9 in der Querverstrebung 7a ist derart ausgebildet, dass das abgestrahlte Licht der Beleuchtungsvorrichtung 1 durch die Beleuchtungsöffnung 9 in die vordere Richtung durchtreten kann.

In einer anderen Ausführungsform kann die Beleuchtungsöffnung 9 einen Kondensor enthalten, der das abgestrahlte Licht der Beleuchtungsmittel streut.

Um die Beleuchtungsöffnung 9 herum sind Beleuchtungsmittelhalterungen 8 angebracht. Die Beleuchtungsmittelhalterungen 8 nehmen das Beleuchtungsmittel 2 durch Verklemmung auf, wie dies üblicherweise bekannt ist.

In einer anderen Ausführungsform können die Beleuchtungsmittel 2 auch verschraubt, oder auf andere übliche Weise befestigt werden. Auch kann die Befestigung beispielsweise an einer Bodenplatte oder an einer Deckenplatte der Beleuchtungsvorrichtung 1 erfolgen.

Im weiteren Strahlenverlauf in vorderer Richtung sind weitere Querverstrebungen 7b und 7c vorgesehen, die analog zu der Querverstrebung 7a befestigt sind. Die Querverstrebungen 7a, 7b, 7c sind derart angeordnet, dass der Strahlenverlauf der Beleuchtungsmittel 2 nicht durch die Querverstrebungen 7a, 7b, 7c beeinflusst wird.

In einer anderen Ausführungsform ist es denkbar, dass die Querverstrebungen aus einem transparenten Material hergestellt sind und als Querwände in der Beleuchtungsvorrichtung vorgesehen sind.

Zwischen der Querverstrebung 7a und der Querverstrebung 7b ist in dem Strahlenverlauf eine erste transparente Platte 3 angeordnet. Ein Teil der Oberfläche der ersten transparenten Platte 3 kreuzt dabei den Strahlenverlauf derart, dass der gesamte Strahl die erste transparente Platte durchlaufen muss. Die erste transparente Platte 3 weist inhomogene Lichtbrechungseigenschaften auf. Dadurch brechen verschiedene Abschnitte der ersten transparenten Platte 3 das Licht auf unterschiedliche Weise. In der bevorzugten Ausführungsform werden diese unterschiedlichen Lichtbrechungseigenschaften durch eine blasige Oberfläche der ersten transparenten Platte 3 verursacht.

Alternativ ist es denkbar, dass die erste transparente Platte 3 inhomogene Materialeigenschaften oder einen inhomogenen Brechungsindex aufweist.

In der bevorzugten Ausführungsform ist die erste transparente Platte 3 als eine Glasscheibe mit blasiger Oberfläche ausgebildet und drehbar angeordnet. Eine Drehung erfolgt um den Mittelpunkt der Scheibe. Der Mittelpunkt der Scheibe liegt nicht auf der Mittelachse M der Beleuchtungsvorrichtung 1, sondern seitlich in einer Richtung verschoben, die nicht die Richtung ist, in die das Beleuchtungsmittel 2 verschoben ist. Somit liegt nur ein peripherer Abschnitt der ersten transparenten Platte 3 in dem Strahlenverlauf des Beleuchtungsmittels 2, wie es auch aus Fig. 1 ersichtlich ist. Weiterhin ist die erste transparente Platte 3 mit einer Bohrung durch ihren Mittelpunkt versehen.

Die erste transparente Platte 3 ist um ihren Mittelpunkt herum drehbar mit einem Plattenaufnahmemittel 10 verbunden. Das Plattenaufnahmemittel 10 nimmt die erste transparente Platte 3 durch die Bohrung durch den Mittelpunkt auf. In der vorderen Richtung ist das Plattenaufnahmemittel 10 mit einem Drehmittel 6 verbunden. Somit ist die erste transparente Platte 3 mit dem Drehmittel 6 gekoppelt. Das Drehmittel 6 erstreckt sich in die vordere Richtung über die Querverstrebung 7b und 7c hinaus, reicht jedoch nicht bis an die zweite transparente Platte 4 heran. Das Drehmittel 6 ist dabei derart angeordnet, dass der Strahlenverlauf nicht beeinflusst wird. Zudem ist das Drehmittel 6 an den Querverstrebungen 7b (vgl. Fig.1) und 7c (nicht gezeigt) befestigt. Vorzugsweise ist das Drehmittel 6 als Motor ausgebildet. Die erste transparente Platte 3 kann somit um seine Mittelachse durch den Strahlenverlauf gedreht werden. Die Drehgeschwindigkeit des Drehmittels 6 kann variiert werden.

Es ist in anderen Ausführungsformen möglich, dass das Drehmittel 6 an einer anderen Position angeordnet ist, beispielsweise hinter der ersten Querverstrebung 7a, oder dass sich das Drehmittel 6 in einer seitlichen Richtung erstreckt, um eine möglichst große Ausleuchtung der Beleuchtungsvorrichtung 1 zu ermöglichen.

Die Querverstrebung 7b befindet sich im Strahlenverlauf nach der ersten transparenten Platte 3. An der Querverstrebung 7b ist in der bevorzugten Ausführungsform eine dritte transparente Platte 5 angeordnet. Die dritte transparente Platte 5 ist derart angeordnet, dass der Strahlenverlauf in Strahlrichtung durch die dritte transparente Platte 5 führt.

Die Querverstrebung 7b ist als eine auswechselbare Schablone ausgebildet. Dabei kann die Form der Schablone beispielsweise die Kontur eines Feuers, von Kohle oder anderen Feuermitteln aufweisen. Der weitere Strahlenverlauf projiziert dann die Form der Schablone auf weitere, nachgeschaltete Komponenten

In einer anderen Ausführungsform können andere, den Strahlenverlauf beeinflussende Mittel an Stelle der Schablone verwendet werden. Auch kann eine Schablone nur an der Querverbindung 7b angebracht sein, so dass die Querverbindung 7b selbst nicht die Schablone darstellt.

Weiterhin ist die dritte transparente Platte 5 vorzugsweise in einem Gelbton gefärbt. Eine andere Färbung die eine Flammensimulation erlaubt, wie zum Beispiel rot oder blau, ist ebenfalls denkbar. Auch sind inhomogene Färbungen und/oder Mischungen verschiedener Farben vorstellbar. Dabei ist es auch denkbar, dass die gefärbte, dritte transparente Platte 5 inhomogene Lichtbrechungseigenschaften aufweist.

Wie oben beschrieben, befindet sich im weiteren Strahlenverlauf die Querverstrebung 7c. Die Querverstrebung 7c dient dabei der Stabilisierung und Befestigung des Drehmittels 6.

Eine vordere Seite der Beleuchtungsvorrichtung 1 schließt mit einer zweiten transparenten Platte 4 ab, die eine vordere Stirnwand der Beleuchtungsvorrichtung 1 bildet. Die zweite transparente Platte 4 ist dabei dazu vorgesehen, in die Rückwand des Backofens integriert zu sein. Weiterhin ist die zweite transparente Platte 4 vorzugsweise als eine mattierte, temperaturbeständige Glasscheibe ausgebildet.

Die Fläche der zweiten transparenten Platte 4, die der hinteren Seite der Beleuchtungsvorrichtung zugewandt ist wird als Rückseite bezeichnet. Die Fläche der zweiten transparenten Platte 4, die dem Backofen zugewandt ist, wird als Vorderseite bezeichnet. Eine erfindungsgemäße Beleuchtung durch die Beleuchtungsmittel 2 ist daher eine Rückwandprojektion auf die zweite transparente Platte 4.

Zum Schutz von eventuell im hinteren Bereich der Beleuchtungsvorrichtung 2 angeordneten elektrischen und/oder mechanischen Mitteln besitzt die zweite transparente Platte 4 vorzugsweise eine geringe Wärmeleitfähigkeit. Die Wärmeleitfähigkeit der zweiten transparenten Platte 4 ist dabei so gewählt, dass Hitze auf der Vorderseite der zweiten transparenten Platte 4, beispielsweise durch den Backofen, den Bereich hinter der zweiten transparenten Platte 4 nicht in einer für elektrische und/oder mechanische Mittel schädlichen Weise erhitzt.

Durch die wie oben beschriebene Vorrichtung wird Licht von dem Beleuchtungsmittel 2 durch die Beleuchtungsöffnung 9, die erste transparente Platte 3 sowie die dritte transparente Platte 5 auf die Rückseite der zweiten transparenten Platte 4 projiziert. Dabei wird in der bevorzugten Ausführungsform die erste transparente Platte 3 durch das Drehmittel 6 gedreht. Aufgrund der inhomogenen optischen Eigenschaften der ersten transparenten Platte 3 wird das von dem Beleuchtungsmittel 2 ausgesandte Licht in verschiedene Richtungen gebrochen. Dieser Effekt kann dadurch verstärkt werden, dass das Beleuchtungsmittel 2 eine Mehrzahl von Lampen aufweist, die zueinander geneigte Strahlenverläufe haben und somit unter verschiedenen Winkeln auf die dritte transparente Platte auftreffen.

Auch kann ein ähnlicher Effekt erzielt werden, indem, beispielsweise durch Steuermittel (nicht gezeigt), die Helligkeit des von den Beleuchtungsmitteln 2 abgestrahlten Lichts variiert wird.

Das Licht durchläuft im Weiteren die gefärbte, dritte transparente Platte 5 und trifft auf die zweite transparente Platte 4. Als Resultat wird farbiges Licht auf die Rückseite der zweiten transparenten Platte 4 projiziert. Durch die mattierte Ausführung der zweiten transparenten Platte 4 entsteht aus einer vorderen Richtung, der Richtung des Backofens, der Eindruck eines im Hintergrund brennenden Feuers.

Neben der oben dargestellten bevorzugten Ausführungsform sind weitere Ausführungsformen denkbar. So können mehrere gefärbte, transparente Platten oder mehrere transparente Platten mit inhomogenen Lichtbrechungseigenschaften in den Strahlengang eingebracht werden. Auch ist es denkbar, dass mehr als eine der in den Strahlengang eingebrachten transparenten Platten drehbar angeordnet sind. Die Drehrichtungen können dabei auch paarweise gegenläufig sein. Dies verstärkt die Illusion eines stark lodernden Feuers.

Es ist ebenso vorstellbar, dass durch die Steuermittel die Drehgeschwindigkeit der Drehmittel 6 mit der Heiztemperatur des Backofens korreliert wird.

Weiterhin ist es denkbar, dass die gefärbte, transparente Platte über inhomogene Lichtbrechungseigenschaften verfügt und an Stelle der ersten transparenten Platte verwendet wird.

Auch ist es denkbar, dass an Stelle einer gefärbten, dritten transparenten Platte farbige Lichtquellen in dem Beleuchtungsmittel verwendet werden.

Ebenso können einzelne Lampen, die in dem Beleuchtungsmittel vorgesehen sind, unabhängig von den anderen Lampen bewegt werden. Diese Bewegung kann auch derart durchgeführt werden, dass eine Kippung der Strahlrichtung erfolgt.

Zusätzlich ist es möglich, dass die Beleuchtungsvorrichtung mit Vertonungsmitteln (nicht gezeigt) ausgestattet ist. Diese können durch entsprechende Vertonung den Eindruck eines prasselnden Feuers wirksam verstärken. Diese Vertonungsmittel können in einer üblichen Form mit einem Tonträger und einem Lautsprecher ausgebildet sein. Weiterhin können die Vertonungsmittel mit einem wie oben erwähnten Steuermittel gekoppelt sein.

Es ist weiterhin denkbar, dass das Steuermittel mehrere oder alle Komponenten, wie den Backofen, die Drehmittel, die Beleuchtungsmittel und/oder die Vertonungsmittel steuert.

## Patentansprüche

1. Backofenbeleuchtungsvorrichtung mit einem Beleuchtungsmittel (2), einer ersten transparenten Platte (3), die inhomogene Lichtbrechungseigenschaften aufweist und die von dem Licht des Beleuchtungsmittels (2) durchstrahlt wird, sowie einer zweiten transparenten Platte (4), die von dem Licht des Beleuchtungsmittels (2) beleuchtet wird.

2. Backofenbeleuchtungsvorrichtung gemäß Anspruch 1, wobei die zweite transparente Platte (4) eine mattierte und/oder temperaturbeständige Glasscheibe ist.

3. Backofenbeleuchtungsvorrichtung gemäß Anspruch 1 oder 2, wobei die zweite transparente Platte (4) eine geringe Wärmeleitfähigkeit besitzt.

4. Backofenbeleuchtungsvorrichtung gemäß einem der vorherigen Ansprüche, wobei die inhomogenen Lichtbrechungseigenschaften der ersten transparenten Platte (3) durch eine blasige Oberfläche verursacht werden.

5. Backofenbeleuchtungsvorrichtung gemäß einem der vorherigen Ansprüche, wobei die erste transparente Platte (3) drehbar angeordnet ist.

6. Backofenbeleuchtungsvorrichtung gemäß einem der vorherigen Ansprüche, wobei zwischen der ersten transparenten Platte (3) und der zweiten transparenten Platte (4) mindestens eine dritte transparente Platte (5) einbringbar ist, die gefärbt ist und die von dem Licht des Beleuchtungsmittels (2) durchstrahlt wird.

7. Backofenbeleuchtungsvorrichtung gemäß Anspruch 6, wobei die mindestens eine dritte transparente Platte (5) drehbar angeordnet ist.

8. Backofenbeleuchtungsvorrichtung gemäß einem der vorherigen Ansprüche, wobei zwischen der ersten transparenten Platte (3) und der zweiten transparenten Platte (4) mindestens eine Schablone einbringbar ist.

9. Beleuchtungsvorrichtung gemäß einem der Ansprüche 6 bis 8, wobei bei einer Mehrzahl von dritten transparenten Platten (5) die dritten transparenten Platten (5) paarweise gegenläufig drehbar sind.

10. Backofenbeleuchtungsvorrichtung gemäß einem der vorherigen Ansprüche, wobei das Beleuchtungsmittel (2) mindestens eine Lampe aufweist.

11. Backofenbeleuchtungsvorrichtung gemäß Anspruch 10, wobei die mindestens eine Lampe als Halogenstrahler ausgebildet ist.

12. Backofenbeleuchtungsvorrichtung gemäß Anspruch 10, wobei die mindestens eine Lampe als LED ausgebildet ist.

13. Backofenbeleuchtungsvorrichtung gemäß einem der Ansprüche 10 bis 12, wobei das Beleuchtungsmittel (2) eine Mehrzahl an Lampen aufweist und derart ausgebildet ist, dass die Strahlrichtungen der Lampen relativ zueinander neigbar sind.

14. Backofenbeleuchtungsvorrichtung gemäß einem der Ansprüche 10 bis 13, wobei die Lampen derart ausgebildet sind, dass paarweise Licht verschiedener Farben mit individuell variierbarer Intensität abstrahlbar ist.

15. Backofenbeleuchtungsvorrichtung gemäß einem der vorherigen Ansprüche, wobei das Beleuchtungsmittel (2) drehbar angeordnet ist.

16. Backofenbeleuchtungsvorrichtung gemäß einem der vorherigen Ansprüche, wobei die zweite transparente Platte (4) als Rückwand eines Backofens ausgebildet ist.

17. Backofenbeleuchtungsvorrichtung gemäß einem der vorherigen Ansprüche, wobei die Beleuchtungsvorrichtung (1) zusätzlich Vertonungsmittel aufweist.
